# EUROPEAN PATENT APPLICATION

(11) **EP 4 831 523 A1**
(43) Date of publication of application: **28.10.2026**
(21) Application number: 26174206.8
(22) Date of filing: 23.04.2026
(51) Int. Cl.: F16L 17/04, F16L 21/06, F16L 25/12, F16L 25/14

(54) **RETAINING DEVICE FOR END RINGS OF PIPE COUPLING**

(30) Priority: 24.04.2025 US 202519188215; 16.04.2026 US 202619649672
(71) Applicant: Krausz Industries Ltd., 4850001 Rosh HaAyin (IL)
(72) Inventor: GOLAN, Liron, Kfar Sava (IL); RYVZH, Sergey, Rishon LeZion (IL)
(74) Representative: Pearl Cohen UK

(57) **Abstract**

A pipe coupling includes a body (19), a center ring at each end of the body, and an end ring (6) coupled to the center ring by means of an annular rim located at an axially-inner end of the end ring. The annular rim extends radially outwards to form an annular hollow portion that fits over and is coupled to the center ring. A retaining device (60) is positioned to snugly press against the annular rim so as to press the end ring and the annular rim against the center ring, thereby maintaining the end ring and the annular rim in a position which is concentric with the center ring and the body of the pipe coupling.

## Description

### FIELD OF THE INVENTION

The present invention relates generally to pipe couplings, and particularly to a pipe coupling with a retaining device that prevents misalignment or dislodgement of end rings of the pipe coupling during handling and shipping.

### BACKGROUND OF THE INVENTION

Many kinds of removable couplings for pipes exist in the art. It is noted that throughout the specification and claims, the term "pipe" encompasses any kind of generally cylindrical object.

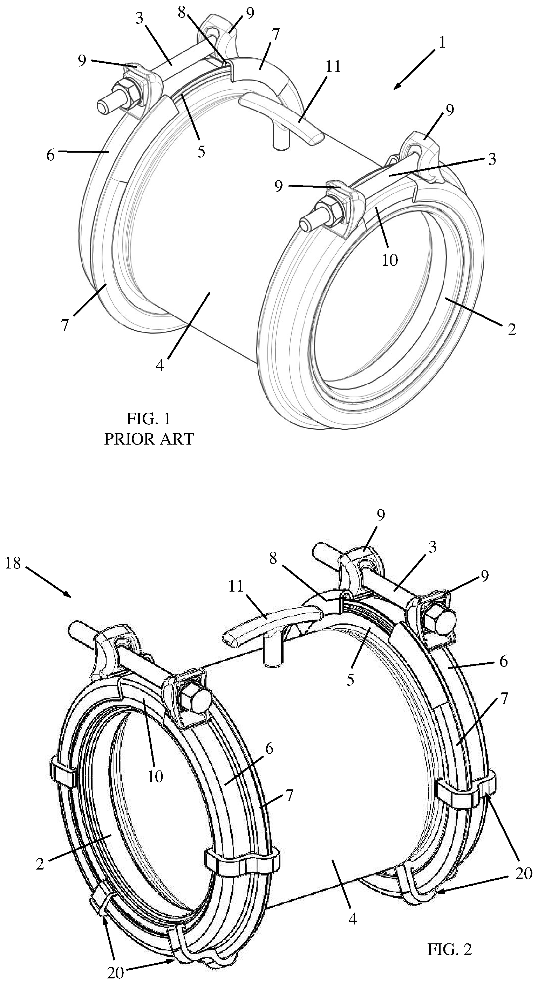

One popular and successful pipe coupling is the HYMAX brand of pipe couplings, an example of which is shown in Fig. 1 as pipe coupling 1, or for short, coupling 1.

Coupling 1 is a wide-range coupling provided with an elastomeric seal member 2, also called a flip gasket 2. The flip gasket 2, when in the folded configuration, can seal against a smaller diameter pipe; when flip gasket 2 is flipped outwards to a non-folded configuration, it can seal against a larger diameter pipe.

Coupling 1 includes a body 4, which is typically but not necessarily cylindrical in shape. At each end of body 4 there is a center ring 5. An end ring 6 is coupled to the center ring 5 by means of an annular rim 7 located at an axially-inner end of end ring 6. The annular rim 7 extends radially outwards to form an annular hollow portion 8 that fits over and is coupled to the center ring 5. Each elastomeric seal member 2 is housed inside each end ring 6. Each end ring 6 includes two fastening ears 9 which receive a single fastener 3 (e.g., bolt and nut or other tightenable screw), which when tightened in a direction transverse to the axial length of the pipe, presses the elastomeric seal member 2 against the surface of the pipe.

A bridge element 10 may extend over and cover the circumferential gap between the fastening ears 9. Coupling 1 may include a lifting handle 11, such as a T-handle.

Sometimes during handling and shipping, the coupling 1 may sustain blows that can cause any one of the end rings 6 to become misaligned and/or decentered with respect to the center ring 5 and/or the body 4. A heavy blow may even cause the end ring 6 to become dislodged from the coupling. Accordingly, there is a need for preventing misalignment or dislodgement of the end rings.

### SUMMARY

The present invention seeks to provide user-friendly retaining device that prevents misalignment or dislodgement of end rings of a pipe coupling during handling and shipping, as is described more in detail hereinbelow.

There is thus provided in accordance with a non-limiting embodiment of the invention, for use with a pipe coupling that includes a body, a center ring at each end of the body, and an end ring coupled to the center ring by means of an annular rim located at an axially-inner end of the end ring, the annular rim extending radially outwards to form an annular hollow portion that fits over and is coupled to the center ring, an accessory including a retaining device positioned to snugly press against the annular rim so as to press the end ring and the annular rim against the center ring, thereby maintaining the end ring and the annular rim in a position which is concentric with the center ring and the body of the pipe coupling.

In accordance with a non-limiting embodiment of the invention the retaining device is positioned to press against outer surfaces of the end ring and the annular rim.

In accordance with a non-limiting embodiment of the invention the retaining device includes a first end ring pressing portion that terminates in a first catch shaped to snugly snap over an edge of the end ring, a second end ring pressing portion that extends from the first end ring pressing portion, and an annular rim pressing portion that extends from the second end ring pressing portion and which is shaped to fit over and press against the annular rim, the annular rim pressing portion terminating in a second catch which is shaped to snugly snap over an edge of the annular rim.

In accordance with a non-limiting embodiment of the invention the retaining device is positioned to press against an inner surface of the annular rim.

In accordance with a non-limiting embodiment of the invention the retaining device includes a resilient wire shaped to fit in the annular hollow portion and press against the annular rim.

In accordance with a non-limiting embodiment of the invention the resilient wire extends through the annular hollow portion so that two opposite ends of the resilient wire meet each other 180° from a top portion of the retaining device.

In accordance with a non-limiting embodiment of the invention the top portion of the retaining device bulges radially outwards.

There is also provided in accordance with a non-limiting embodiment of the invention a pipe coupling that includes any of the retaining devices described herein.

Some embodiments of the present invention may provide a retaining device for a pipe coupling, the pipe coupling including an annular body, an end ring coupled, at an axially-inner end, to the annular body, and a seal member housed at least partly within the end ring between the axially-inner end and an axially-outer end of the end ring, the retaining device including: a first portion including a first catch configured to snugly snap over the axially-outer end of the end ring; a second portion extending from the first portion; a third portion extending from the second portion, the third portion including a second catch configured to snugly snap over the axially-inner end of the end ring; and an elongated extension projecting from the first portion; wherein at least inner surfaces of the first portion, the second portion and the third portion are shaped to fit over and press an outer surface of the end ring to hold the end ring and the seal member in a fixed axial and radial position relative to the annular body; and wherein when the retaining device is installed on the pipe coupling, the elongated extension protrudes into a central opening of the annular body.

In some embodiments, a free end of the elongated extension is curved inwardly.

In some embodiments, a free end of the elongated extension is sharpened.

In some embodiments, the first catch and the second catch are disposed at the inner surfaces of the first portion and the third portion.

In some embodiments, the first portion, the second portion, the third portion and the elongated extension are formed of one piece of material.

In some embodiments, the second portion is transverse to the first portion.

In some embodiments, the third portion is transverse to the second portion.

In some embodiments, the first portion and the third portion are transverse to the second portion and are directed substantially in the same direction.

Some embodiments of the present invention may provide a pipe coupling including: an annular body; an end ring coupled, at an axially-inner end, to the annular body; a seal member housed at least partly within the end ring between the axially-inner end and an axially-outer end of the end ring; and a plurality of retaining devices circumferentially installed on the end ring, each of the retaining devices including: a first portion including a first catch configured to snugly snap over the axially-outer end of the end ring; a second portion extending from the first portion; a third portion extending from the second portion, the third portion including a second catch configured to snugly snap over the axially-inner end of the end ring; and an elongated extension projecting from the first portion; wherein at least inner surfaces of the first portion, the second portion and the third portion are shaped to fit over and press an outer surface of the end ring to hold the end ring and the seal member in a fixed axial and radial position relative to the annular body; and wherein when the retaining devices are installed on the pipe coupling, the elongated extensions of the retaining devices protrude into a central opening of the annular body.

In some embodiments, a free end of the elongated extension of each of the retaining devices is curved inwardly.

In some embodiments, a free end of the elongated extension of each of the retaining devices is sharpened.

In some embodiments, the first catch and the second catch of each of the retaining devices are disposed at the inner surfaces of the first portion and the third portion of a respective retaining device.

In some embodiments, the first portion, the second portion, the third portion and the elongated extension of each of the retaining devices are formed of one piece of material.

In some embodiments, the second portion of each of the retaining devices is transverse to the first portion of a respective retaining device.

In some embodiments, the third portion of each of the retaining devices is transverse to the second portion of a respective retaining device.

In some embodiments, the first portion and the third portion of each of the retaining devices are transverse to the second portion of a respective retaining device and are directed substantially in the same direction.

Some embodiments of the present invention may provide an accessory for a pipe coupling, the pipe coupling comprising a body, a center ring at each end of said body, and an end ring coupled to the center ring by means of an annular rim located at an axially-inner end of said end ring, said annular rim extending radially outwards to form an annular hollow portion that fits over and is coupled to said center ring, the accessory comprising: a retaining device positioned to snugly press against said annular rim so as to press said end ring and said annular rim against said center ring, thereby maintaining said end ring and said annular rim in a position which is concentric with said center ring and said body of said pipe coupling.

In some embodiments said retaining device is positioned to press against outer surfaces of said end ring and said annular rim, and said retaining device comprising a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.

In some embodiments said retaining device comprises an elongated extension projecting from the first end ring pressing portion, wherein when the retaining device is installed on the pipe coupling, the elongated extension protrudes into a central opening of the body of the pipe coupling.

In some embodiments a free end of the elongated extension is curved inwardly.

In some embodiments a free end of the elongated extension is sharpened.

In some embodiments said retaining device is positioned to press against an inner surface of said annular rim, said retaining device comprising a resilient wire shaped to fit in said annular hollow portion and press against said annular rim.

In some embodiments said resilient wire extends through said annular hollow portion so that two opposite ends of said resilient wire meet each other 180° from a top portion of said retaining device.

In some embodiments said top portion of said retaining device bulges radially outwards.

Some embodiments of the present invention may provide a pipe coupling comprising: a body, a center ring at each end of said body, and an end ring coupled to the center ring by means of an annular rim located at an axially-inner end of said end ring, said annular rim extending radially outwards to form an annular hollow portion that fits over and is coupled to said center ring; and a retaining device positioned to snugly press against said annular rim so as to press said end ring and said annular rim against said center ring, thereby maintaining said end ring and said annular rim in a position which is concentric with said center ring and said body of said pipe coupling.

In some embodiments said retaining device is positioned to press against outer surfaces of said end ring and said annular rim, said retaining device comprising a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.

In some embodiments said retaining device comprises an elongated extension projecting from the first end ring pressing portion, wherein when the retaining device is installed on the pipe coupling, the elongated extension protrudes into a central opening of the body of the pipe coupling.

In some embodiments a free end of the elongated extension is curved inwardly.

In some embodiments said retaining device is positioned to press against an inner surface of said annular rim, said retaining device comprising a resilient wire shaped to fit in said annular hollow portion and press against said annular rim.

In some embodiments said resilient wire extends through said annular hollow portion so that two opposite ends of said resilient wire meet each other 180° from a top portion of said retaining device.

In some embodiments said top portion of said retaining device bulges radially outwards.

### BRIEF DESCRIPTION OF DRAWINGS

The present invention will be understood and appreciated more fully from the following detailed description, taken in conjunction with the drawings in which:
Fig. 1 is a simplified perspective illustration of a prior art pipe coupling.
Fig. 2 is a simplified perspective illustration of a pipe coupling that has retaining devices for end rings of the pipe coupling, in accordance with a non-limiting embodiment of the present invention.
Fig. 3 is an enlarged view of the retaining device of Fig. 2 coupled to the end ring and center ring of the pipe coupling.
Figs. 4A and 4B are perspective and side-view illustrations, respectively, of the retaining device of Fig. 2.
Fig. 5 is a simplified perspective illustration of a pipe coupling that has retaining devices for end rings of the pipe coupling, in accordance with another non-limiting embodiment of the present invention.
Fig. 5A is an enlarged view of the retaining device of Fig. 5 coupled to the end ring and center ring of the pipe coupling.
Fig. 5B is a cutaway view of the retaining device of Fig. 5 received in an annular rim of the end ring.
Fig. 6A is a perspective view of a retaining device for a pipe coupling, wherein the retaining device includes an elongated extension or portion, according to some embodiments of the invention.
Fig. 6B is a side view of the retaining device of Fig. 6B, according to some embodiments of the invention.
Fig. 6C is a perspective view of a pipe coupling with a plurality of retaining device installed on pipe coupling, according to some embodiments of the invention.
Fig. 6D is a longitudinal cross section of a pipe coupling and retaining devices along line A-A of Fig. 6C, according to some embodiments of the invention.
Fig. 6E is an enlarged portion B of Fig. 6D, according to some embodiments of the invention.

### DETAILED DESCRIPTION

In the following description, various aspects of the present invention are described. For purposes of explanation, specific configurations and details are set forth in order to provide a thorough understanding of the present invention. However, it will also be apparent to one skilled in the art that the present invention can be practiced without the specific details presented herein. Furthermore, well known features can have been omitted or simplified in order not to obscure the present invention. With specific reference to the drawings, it is stressed that the particulars shown are by way of example and for purposes of illustrative discussion of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention can be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that can be practiced or carried out in various ways as well as to combinations of the disclosed embodiments. Also, it is to be understood that the phraseology and terminology employed herein is for the purpose of description and should not be regarded as limiting.

The terms "top" and "bottom," "upper" and "lower" and "vertical" and "horizontal" as may be used herein are by way of example and illustrative purposes only, and are not meant to limit the description of the invention inasmuch as the referenced item can be exchanged in position and orientation. Also, as used herein, the terms "substantially," "approximately" and/or "about" mean that the specified dimension or parameter may be varied within an acceptable manufacturing tolerance for a given application. In one embodiment, the acceptable manufacturing tolerance is ±0.15mm, or alternatively, ± 2.5% of a given dimension.

For purposes of this disclosure, a physical or electrical connection may be a direct connection or an indirect connection (e.g., via one or more other parts). In some cases, when a first element is referred to as being connected, affixed, mounted or coupled to a second element (either physically or electrically), the first and second elements may be directly connected, affixed, mounted or coupled to each other or indirectly connected, affixed, mounted or coupled to each other (either physically or electrically). When a first element is referred to as being directly connected, affixed, mounted or coupled to a second element, then there are no intervening elements between the first and second elements (other than possibly an adhesive or melted metal used to connect, affix, mount or couple the first and second elements).

Reference is now made to Fig. 2, which illustrates a pipe coupling 18 that has one or more retaining devices 20 for end rings of the pipe coupling, in accordance with a non-limiting embodiment of the present invention. In the illustrated embodiment, pipe coupling 18 is constructed like pipe coupling 1 of Fig. 1, with like elements being designated by like reference numbers, but the invention is not limited to this configuration of a pipe coupling and is applicable for any kind of pipe coupling that has an end ring or similar member which must be retained in place during handling and shipping.

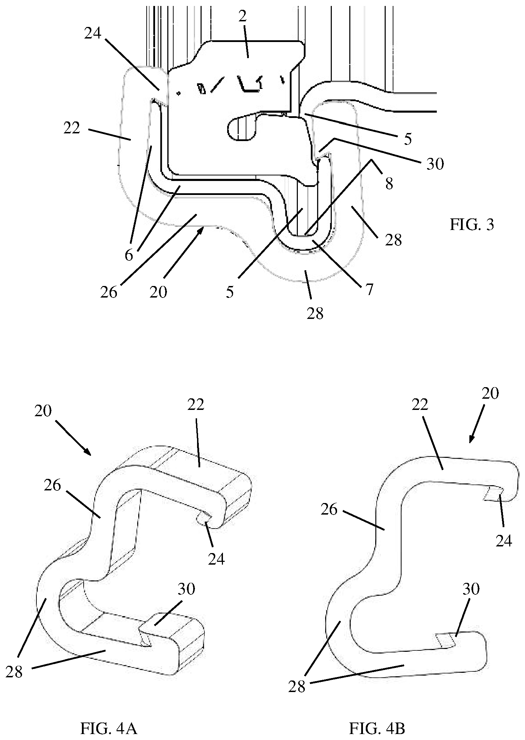

The retaining device 20 snugly fits over the end ring 6 and annular rim 7 and presses them against the center ring 5 of coupling 18. This will be seen in greater detail in Fig. 3, is as now explained.

Referring to Fig. 3, it is seen that retaining device 20 includes a first end ring pressing portion 22 that terminates in a first catch 24 which is cantilever snap joint or torsion snap joint shaped to snugly snap over an edge of the end ring 6. A second end ring pressing portion 26 extends (e.g., perpendicularly) from the first end ring pressing portion 22. An annular rim pressing portion 28 extends from the second end ring pressing portion 26 and is shaped to fit over and press against annular rim 7. The annular rim pressing portion 28 terminates in a second catch 30 which is shaped to snugly snap over an edge of the annular rim 7.

Figs. 4A and 4B are perspective and side-view illustrations, respectively, of the retaining device 20. It is noted that retaining device 20 may be made of an injection molded plastic (such as but not limited to, nylon (polyamide), polycarbonate, polypropylene, ABS (acrylonitrile butadiene styrene)), or metal or any other suitable material that is resilient, yet stiff and durable without having fatigue stress, to snugly snap over the end ring and annular rim and maintain them in place with proper concentricity with respect to the rest of the coupling.

In usage, as seen in Figs. 2 and 3, one or more retaining devices 20 are snugly pressed over end ring 6 and annular rim 7 and press them against center ring 5, thereby maintaining end ring 6 and annular rim 7 in their correct position which is concentric with center ring 5 and the body of the coupling. The retaining devices 20 are removed from the coupling before the coupling is installed in place.

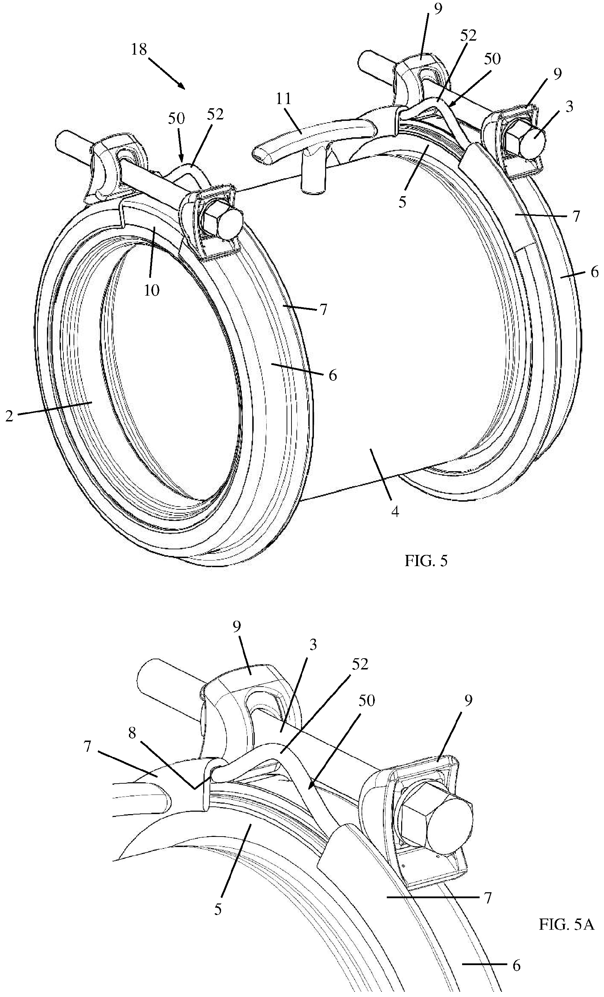

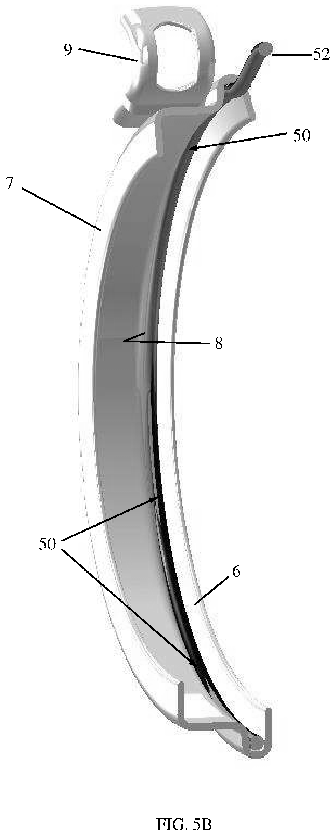

Reference is now made to Fig. 5, which illustrates pipe coupling 18 that has one or more retaining devices 50 for end rings 6 of the pipe coupling, in accordance with another non-limiting embodiment of the present invention.

In this embodiment, retaining device 50 includes a resilient wire (with a circular cross section or other cross sectional shapes) shaped to fit in annular hollow portion 8 and press against annular rim 7, thereby pressing annular rim 7 against center ring 5 and maintaining end ring 6 and annular rim 7 in their correct position which is concentric with center ring 5 and the body of the coupling. The retaining device 50 may be made of a spring steel alloy or other material with suitable spring constant and strength. As seen best in Fig. 5B, retaining device 50 extends all the way through annular hollow portion 8 so that the two opposite ends of the wire meet each other 180° from the top portion 52 of the wire which is typically aligned with the center of the fastener 3. The top portion 52 of the wire may bulge radially outwards which provides a visual reminder to the user to remove retaining device 50 before using the coupling.

In summary, both retaining devices 20 and 50 snugly press against annular rim 7 to press end ring 6 and its annular rim 7 against center ring 5, thereby maintaining end ring 6 and annular rim 7 in their correct position which is concentric with center ring 5 and the body of the coupling. The retaining devices 20 and 50 differ regarding against which part of annular rim 7 they press. Retaining device 20 presses against the outer surfaces of end ring 6 and annular rim 7. Retaining device 50 presses against the inner surface of annular rim 7.

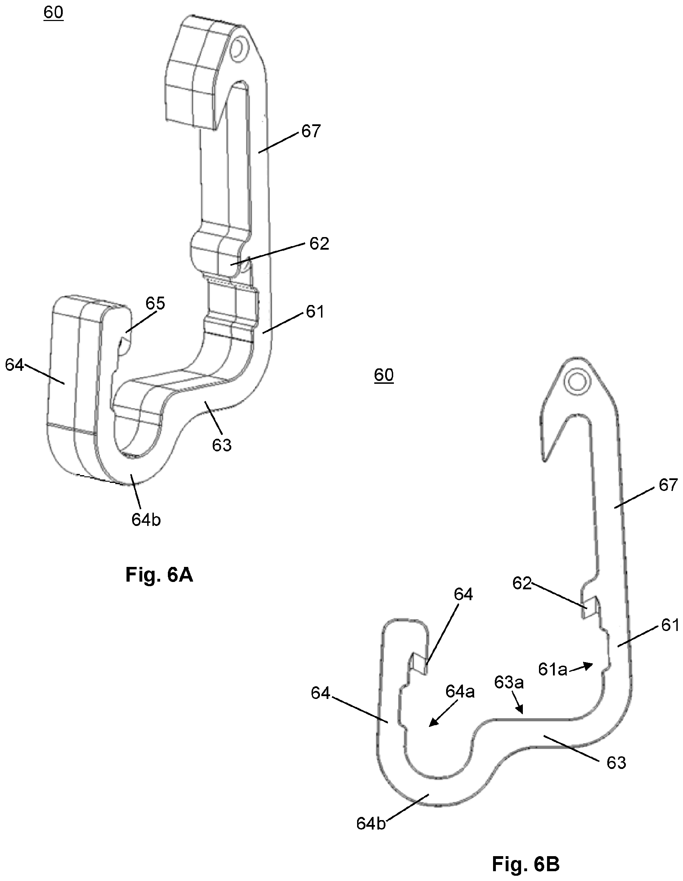

Reference is made to Fig. 6A, which is a perspective view of a retaining device 60 for a pipe coupling 18, wherein retaining device 60 includes an elongated extension or portion 67, according to some embodiments of the invention.

Reference is also made to Fig. 6B, which is a side view of retaining device 60 of Fig. 6B, according to some embodiments of the invention.

Retaining device 60 may include a first portion 61 (e.g., such as first end ring pressing portion 22 of retaining device 20). First portion 61 may include a first catch 62 (e.g., such as first catch 24 of retaining device 20). First catch 62 may be disposed on an inner surface 61a of first portion 61. In use, e.g. when retaining device 60 is installed on pipe coupling 18, first catch 62 may snap over (e.g., snugly snap over) an axially-outer end 6a of end ring 6 of pipe coupling 18 (e.g., as described below).

Retaining device 60 may include a second portion 63 (e.g., such as second end ring pressing portion 26 of retaining device 20). Second portion 63 may extend from first portion 61. Second portion 63 may extend in a transverse (e.g., perpendicular, or substantially perpendicular) direction from first portion 61.

Retaining device 60 may include a third portion 64. Third portion 64 may extend from second portion 63. Third portion 64 may extend in a transverse (e.g., perpendicular, or substantially perpendicular) direction from second portion 63. Third portion 64 and first portion 61 may extend from second portion 63 in the same, or substantially the same, direction. Second portion 63 may interconnect first portion 61 and third portion 64 of retaining device 60. Third portion 64 may include a second catch 65 (e.g., such as second catch 30 of retaining device 20). Second catch 65 may be disposed at a free end of third portion 64. Second catch 65 may be disposed on an inner surface 64a of third portion 64. In use, e.g. when retaining device 60 is installed on pipe coupling 18, second catch 65 may snap over (e.g., snugly snap over) an axially-inner end 6b of end ring 6 of pipe coupling 18 (e.g., as described below). Inner surface 64a of third portion 64 and inner surface 61a of first portion 61 may face each other.

First portion 61, second portion 63 and third portion 64 of retaining device 60, or at least inner surfaces 61a, 63a, 64a thereof, may have shapes that fit over and press (e.g., when in use) an outer surface 6c of end ring 6 of pipe coupling 18. In the example of Figs. 6A and 6B, third portion 64 of retaining device 60 includes an outwardly curved portion 64b. Outwardly curved portion 64b may have shape that fits over and presses (e.g., when in use) annular rim 7 of end ring 6 of pipe coupling 18. Third portion 64 having outwardly curved portion 64b may be similar to annular rim pressing portion 28 of retaining device 20. First portion 61, second portion 63 and third portion 64 of retaining device 60 may press and hold end ring 6, and thus seal member 2 disposed between axially-outer end 6a and axially-inner end 6b of end ring 6, of pipe coupling 18 in a fixed axial and radial position relative to an annular body 19 of pipe coupling 18.

Retaining device 60 may include an elongated extension or portion 67. Elongated extension 67 may extend or project from first portion 61. First portion 61, second portion 63, third portion 64 and elongated extension 67 of retaining device 60 may be formed of one piece of material. For example, retaining device 60 may be formed of plastic or metal or any other suitable material that is resilient, yet stiff and durable, to snugly snap over end ring 6 and maintain it in place with proper concentricity with respect to the rest of pipe coupling 18.

In use, e.g. when retaining device 60 is installed on pipe coupling 18, elongated extension 67 may protrude into a central opening 19a of annular body 19. By protruding into central opening 19a of annular body 19 of pipe coupling 18, elongated extension 67 may intentionally interfere with insertion of a pipe into annular body 19 when retaining device 60 is installed on pipe coupling 18. Accordingly, retaining device 60 may prevent installation of pipe coupling 18 unless retaining device 60 is first removed. This may ensure that retaining device 60 is removed prior to installation of pipe coupling 18, thereby preventing installation of pipe coupling 18 with retaining device 60 still in place, and reducing the likelihood of incorrect or unsafe installation.

A free end of elongated extension 67 of retaining device 60 may be curved inwards (e.g., towards inner surface 63a of second portion 63 of retaining device 60), for example to form an angled or hook-shaped free end 67a. Free end 67 of elongated extension 67 may be sharpened. After retaining device 60 is removed from pipe coupling 18, hook-shaped free end 67a of elongated extension 67 may be used as a manipulation tool for seal member 2. For example, the hook-shaped free end 67a may be inserted between layers of seal member 2, such as between an inner collar layer and an outer layer of seal member 2, to separate or open the layers of seal member 2. This may allow seal member 2 to be flipped or moved to an open configuration without the use of fingers, thereby increasing an initial insertion diameter of pipe coupling 18 and facilitating insertion of a pipe, including pipes having diameters near a maximum allowable diameter of pipe coupling 18.

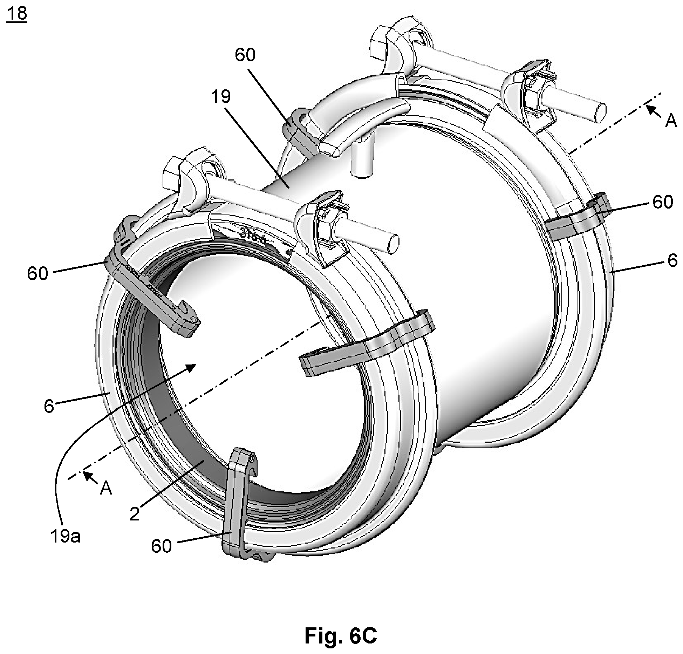

Reference is made to Fig. 6C, which is a perspective view of pipe coupling 18 with a plurality of retaining device 60 installed on pipe coupling 18, according to some embodiments of the invention.

A plurality of retaining devices 60 may be installed or placed on opposing end rings 6 (e.g., disposed at opposing ends of annular body 19) of pipe coupling 18. In the example of Fig. 6C, three retaining devices 60 are installed on each end ring 6. However, any other number of retaining devices can be used. Retaining devices 60 may be installed circumferentially around end rings 6 of pipe coupling 18. Retaining devices 60 may be equally spaced along the circumference of each end ring 6 of pipe coupling 18.

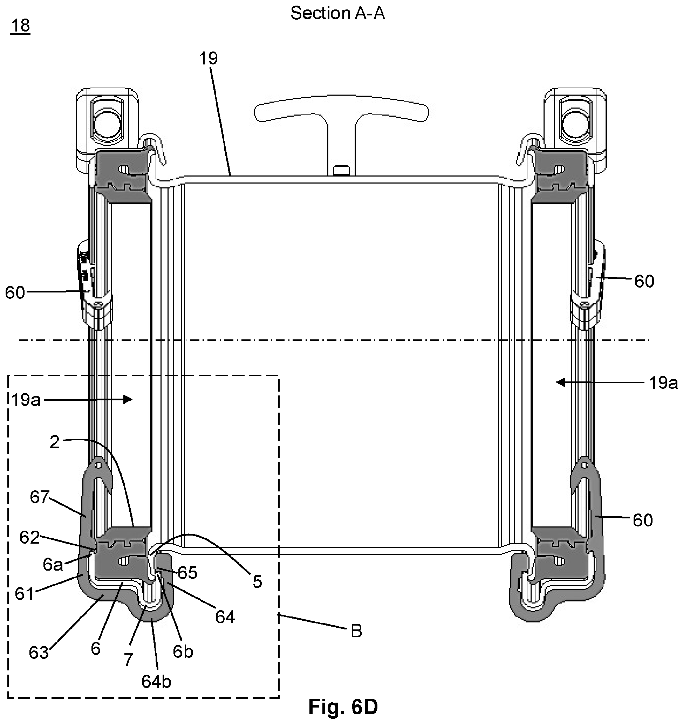

Reference is made to Fig. 6D, which is a longitudinal cross section of pipe coupling 18 and retaining devices 60 along line A-A of Fig. 6C, according to some embodiments of the invention.

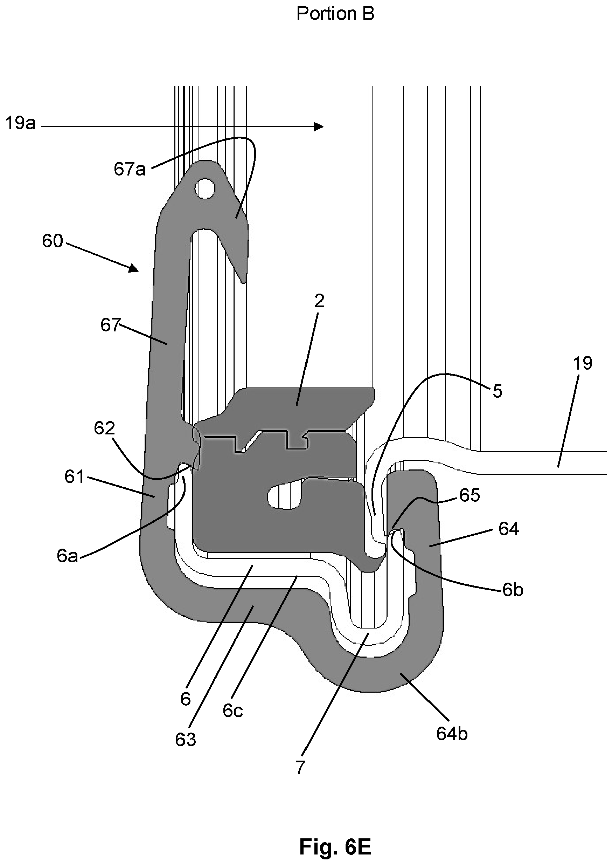

Reference is also made to Fig. 6E, which is an enlarged portion B of Fig. 6D, according to some embodiments of the invention.

In use, when retaining device 60 is installed on end ring 6, first catch 62 of first portion 61 of retaining device 60 snugly snaps over axially-outer end 6a of end ring 6 and second catch 65 of third portion 63 of retaining device 60 snugly snaps over axially-inner end 6b of end ring 6 of pipe coupling 18. Axially-inner end 6b of end ring 6 is the end of end ring 6 that engages center ring 5 of annular body 19, and axially-outer end 6a of end ring 6 is the end of end ring 6 that is opposite to axially-inner end 6b. Seal member 2 is disposed or accommodated at least partly within end ring 6 between axially-outer end 6b and axially-inner end 6a of end ring 6.

When retaining device 60 is installed on end ring 6, first portion 61, second portion 63 and third portion 64 of retaining device 60 press and hold end ring 6 and seal member 2 in a fixed axial and radial position relative to an annular body 19 of pipe coupling 18. Elongated extension 67 of retaining device 60, protruding into central opening 19a of annular body 19, interferes with insertion of a pipe into annular body 19 and prevents installation of pipe coupling 18 unless retaining device 60 is first removed. This may ensure that retaining device 60 is removed prior to installation of pipe coupling 18, thereby preventing installation of pipe coupling 18 with retaining device 60 still in place, and reducing the likelihood of incorrect or unsafe installation.

In the above description, an embodiment is an example or implementation of the invention. The various appearances of "one embodiment", "an embodiment", "certain embodiments" or "some embodiments" do not necessarily all refer to the same embodiments. Although various features of the invention can be described in the context of a single embodiment, the features can also be provided separately or in any suitable combination. Conversely, although the invention can be described herein in the context of separate embodiments for clarity, the invention can also be implemented in a single embodiment. Certain embodiments of the invention can include features from different embodiments disclosed above, and certain embodiments can incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

Although embodiments of the invention are not limited in this regard, the terms "plurality" and "a plurality" as used herein can include, for example, "multiple" or "two or more". The terms "plurality" or "a plurality" can be used throughout the specification to describe two or more components, devices, elements, units, parameters, or the like. The term set when used herein can include one or more items.

The invention is not limited to those diagrams or to the corresponding descriptions. For example, flow need not move through each illustrated box or state, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

The description also comprises the disclosure of the following clauses and items:
Clause 1: For use with a pipe coupling that comprises a body, a center ring at each end of said body, and an end ring coupled to the center ring by means of an annular rim located at an axially-inner end of said end ring, said annular rim extending radially outwards to form an annular hollow portion that fits over and is coupled to said center ring, an accessory comprising: a retaining device positioned to snugly press against said annular rim so as to press said end ring and said annular rim against said center ring, thereby maintaining said end ring and said annular rim in a position which is concentric with said center ring and said body of said pipe coupling.
Clause 2: The accessory according to clause 1, wherein said retaining device is positioned to press against outer surfaces of said end ring and said annular rim.
Clause 3: The accessory according to clause 2, wherein said retaining device comprises a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.
Clause 4: The accessory according to clause 1, wherein said retaining device is positioned to press against an inner surface of said annular rim.
Clause 5: The accessory according to clause 4, wherein said retaining device comprises a resilient wire shaped to fit in said annular hollow portion and press against said annular rim.
Clause 6: The accessory according to clause 5, wherein said resilient wire extends through said annular hollow portion so that two opposite ends of said resilient wire meet each other 180° from a top portion of said retaining device.
Clause 7: The accessory according to clause 6, wherein said top portion of said retaining device bulges radially outwards.
Clause 8: A pipe coupling comprising: a body, a center ring at each end of said body, and an end ring coupled to the center ring by means of an annular rim located at an axially-inner end of said end ring, said annular rim extending radially outwards to form an annular hollow portion that fits over and is coupled to said center ring; and a retaining device positioned to snugly press against said annular rim so as to press said end ring and said annular rim against said center ring, thereby maintaining said end ring and said annular rim in a position which is concentric with said center ring and said body of said pipe coupling.
Clause 9: The pipe coupling according to clause 8, wherein said retaining device is positioned to press against outer surfaces of said end ring and said annular rim.
Clause 10: The pipe coupling according to clause 9, wherein said retaining device comprises a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.
Clause 11: The pipe coupling according to clause 8, wherein said retaining device is positioned to press against an inner surface of said annular rim.
Clause 12: The pipe coupling according to clause 11, wherein said retaining device comprises a resilient wire shaped to fit in said annular hollow portion and press against said annular rim.
Clause 13: The pipe coupling according to clause 12, wherein said resilient wire extends through said annular hollow portion so that two opposite ends of said resilient wire meet each other 180° from a top portion of said retaining device.
Clause 14: The pipe coupling according to clause 13, wherein said top portion of said retaining device bulges radially outwards.

Item 1: A retaining device for a pipe coupling, the pipe coupling comprising an annular body, an end ring coupled, at an axially-inner end, to the annular body, and a seal member housed at least partly within the end ring between the axially-inner end and an axially-outer end of the end ring, the retaining device comprising: a first portion comprising a first catch configured to snugly snap over the axially-outer end of the end ring; a second portion extending from the first portion; a third portion extending from the second portion, the third portion comprising a second catch configured to snugly snap over the axially-inner end of the end ring; and an elongated extension projecting from the first portion; wherein at least inner surfaces of the first portion, the second portion and the third portion are shaped to fit over and press an outer surface of the end ring to hold the end ring and the seal member in a fixed axial and radial position relative to the annular body; and wherein when the retaining device is installed on the pipe coupling, the elongated extension protrudes into a central opening of the annular body.
Item 2: The retaining device of item 1, wherein a free end of the elongated extension is curved inwardly.
Item 3: The retaining device of item 1, wherein a free end of the elongated extension is sharpened.
Item 4: The retaining device of item 1, wherein the first catch and the second catch are disposed at the inner surfaces of the first portion and the third portion.
Item 5: The retaining device of item 1, wherein the first portion, the second portion, the third portion and the elongated extension are formed of one piece of material.
Item 6: The retaining device of item 1, wherein the second portion is transverse to the first portion.
Item 7: The retaining device of item 1, wherein the third portion is transverse to the second portion.
Item 8: The retaining device of item 1, wherein the first portion and the third portion are transverse to the second portion and are directed substantially in the same direction.
Item 9: A pipe coupling comprising: an annular body; an end ring coupled, at an axially-inner end, to the annular body; a seal member housed at least partly within the end ring between the axially-inner end and an axially-outer end of the end ring; and a plurality of retaining devices circumferentially installed on the end ring, each of the retaining devices comprising: a first portion comprising a first catch configured to snugly snap over the axially-outer end of the end ring; a second portion extending from the first portion; a third portion extending from the second portion, the third portion comprising a second catch configured to snugly snap over the axially-inner end of the end ring; and an elongated extension projecting from the first portion; wherein at least inner surfaces of the first portion, the second portion and the third portion are shaped to fit over and press an outer surface of the end ring to hold the end ring and the seal member in a fixed axial and radial position relative to the annular body; and wherein when the retaining devices are installed on the pipe coupling, the elongated extensions of the retaining devices protrude into a central opening of the annular body.
Item 10: The pipe coupling of item 9, wherein a free end of the elongated extension of each of the retaining devices is curved inwardly.
Item 11: The pipe coupling of item 9, wherein a free end of the elongated extension of each of the retaining devices is sharpened.
Item 12: The pipe coupling of item 9, wherein the first catch and the second catch of each of the retaining devices are disposed at the inner surfaces of the first portion and the third portion of a respective retaining device.
Item 13: The pipe coupling of item 9, wherein the first portion, the second portion, the third portion and the elongated extension of each of the retaining devices are formed of one piece of material.
Item 14: The pipe coupling of item 9, wherein the second portion of each of the retaining devices is transverse to the first portion of a respective retaining device.
Item 15: The pipe coupling of item 9, wherein the third portion of each of the retaining devices is transverse to the second portion of a respective retaining device.
Item 16: The pipe coupling of item 9, wherein the first portion and the third portion of each of the retaining devices are transverse to the second portion of a respective retaining device and are directed substantially in the same direction.

## Claims

1. An accessory for a pipe coupling, the pipe coupling comprising a body, a center ring at each end of said body, and an end ring coupled to the center ring by means of an annular rim located at an axially-inner end of said end ring, said annular rim extending radially outwards to form an annular hollow portion that fits over and is coupled to said center ring, the accessory comprising:
a retaining device positioned to snugly press against said annular rim so as to press said end ring and said annular rim against said center ring, thereby maintaining said end ring and said annular rim in a position which is concentric with said center ring and said body of said pipe coupling.

2. The accessory according to claim 1, wherein said retaining device is positioned to press against outer surfaces of said end ring and said annular rim, and said retaining device comprising a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.

3. The accessory according to claim 2, wherein said retaining device comprises an elongated extension projecting from the first end ring pressing portion, wherein when the retaining device is installed on the pipe coupling, the elongated extension protrudes into a central opening of the body of the pipe coupling.

4. The accessory according to claim 3, wherein a free end of the elongated extension is curved inwardly.

5. The accessory according to claim 3, wherein a free end of the elongated extension is sharpened.

6. The accessory according to claim 1, wherein said retaining device is positioned to press against an inner surface of said annular rim, said retaining device comprising a resilient wire shaped to fit in said annular hollow portion and press against said annular rim.

7. The accessory according to claim 6, wherein said resilient wire extends through said annular hollow portion so that two opposite ends of said resilient wire meet each other 180° from a top portion of said retaining device.

8. The accessory according to claim 6, wherein said top portion of said retaining device bulges radially outwards.

9. A pipe coupling comprising:
a body, a center ring at each end of said body, and an end ring coupled to the center ring by means of an annular rim located at an axially-inner end of said end ring, said annular rim extending radially outwards to form an annular hollow portion that fits over and is coupled to said center ring; and
a retaining device positioned to snugly press against said annular rim so as to press said end ring and said annular rim against said center ring, thereby maintaining said end ring and said annular rim in a position which is concentric with said center ring and said body of said pipe coupling.

10. The pipe coupling according to claim 9, wherein said retaining device is positioned to press against outer surfaces of said end ring and said annular rim, said retaining device comprising a first end ring pressing portion that terminates in a first catch shaped to snugly snap over an edge of said end ring, a second end ring pressing portion that extends from said first end ring pressing portion, and an annular rim pressing portion that extends from said second end ring pressing portion and which is shaped to fit over and press against said annular rim, said annular rim pressing portion terminating in a second catch which is shaped to snugly snap over an edge of said annular rim.

11. The pipe coupling according to claim 10, wherein said retaining device comprises an elongated extension projecting from the first end ring pressing portion, wherein when the retaining device is installed on the pipe coupling, the elongated extension protrudes into a central opening of the body of the pipe coupling.

12. The pipe coupling according to claim 11, wherein a free end of the elongated extension is curved inwardly.

13. The pipe coupling according to claim 9, wherein said retaining device is positioned to press against an inner surface of said annular rim, said retaining device comprising a resilient wire shaped to fit in said annular hollow portion and press against said annular rim.

14. The pipe coupling according to claim 13, wherein said resilient wire extends through said annular hollow portion so that two opposite ends of said resilient wire meet each other 180° from a top portion of said retaining device.

15. The pipe coupling according to claim 13, wherein said top portion of said retaining device bulges radially outwards.
